# DEMANDE DE BREVET EUROPEEN

(11) **EP 2 889 854 A1**
(43) Date de publication de la demande: **01.07.2015**
(21) Numéro de dépôt: 14151152.7
(22) Date de dépôt: 14.01.2014
(51) Int. Cl.: G09C 1/00, H04L 9/08

(54) **Dispositif de communication comportant un capteur d'activation lumineux**

(30) Priorité: 30.12.2013 EP 13306894
(71) Demandeur: Gemalto SA, 92190 Meudon (FR)
(72) Inventeur: Touvet, Stéphane, 92190 Meudon (FR); Thill, Michel, 92190 Meudon (FR); Spyropoulos, Evangelos, 92190 Meudon (FR); Cammas, Guillaume, 92190 Meudon (FR)
(74) Mandataire: Cour, Pierre

(57) **Abrégé**

Le dispositif de communication 1 comprend une mémoire M permettant le stockage d'une clef numérique et d'un algorithme de diversification ; un calculateur D permettant de générer un code d'identification à partir d'au moins la clef numérique et de l'algorithme de diversification ; un afficheur 10 permettant l'affichage d'un code d'identification généré 101, 102, 103 par le calculateur. Le dispositif de communication comprend en outre un capteur de lumière 11 permettant de recevoir un signal lumineux 30.

## Description

### DOMAINE

Le domaine de l'invention concerne les dispositifs permettant de sécuriser des transactions, notamment au moyen de la génération d'un code de sécurité. Plus précisément, le domaine de l'invention s'applique au domaine des cartes bancaires à afficheur comprenant des modules pour générer des codes de sécurisation de transaction.

### ART ANTERIEUR

Actuellement, il existe déjà des solutions permettant de réaliser des cartes bancaires permettant de sécuriser des transactions faites par une simple identification de la carte par son numéro, sa date de validité et son titulaire par téléphone ou par internet.

Un simple moyen de sécurisation d'une transaction est d'utiliser un cryptogramme visuel à 3 chiffres, également appelé CSC, CVV ou CVC ou encore V-code ou CCV. Nous utilisons dans la présente demande l'acronyme largement répandu et connu de l'homme de l'art « CVV » désignant : « Card Verification Value » dans la terminologie anglo-saxonne.

Un des problèmes de ce moyen de sécurisation est que le code est affiché de manière statique sur l'une des faces de la carte. De ce fait, le code peut être aisément lu par un tiers et peut être utilisé conjointement avec les autres informations collectées sur la carte.

Pour améliorer la sécurité de ce type de transaction par carte bancaire, il est connu de rendre le code CVV dynamique. Le CVV dynamique correspond à un code variable dans le temps qui est affiché sur la carte. Le code variable est fournit par un générateur de type pseudo aléatoire synchronisé avec un serveur qui permet de vérifier l'authenticité du code en fonction de la date et de l'heure de la transaction.

Cependant, l'usage d'un CVV dynamique soulève quelques problèmes. Un premier problème vient de la personnalisation qui comprend l'introduction d'une clef de chiffrement numérique dans une mémoire du module d'affichage avant son intégration dans une carte à puce.

Cette solution est complexe d'un point de vue organisationnel car il est nécessaire de multiplier les opérations de traçage des modules de génération et d'affichage de codes CVV avec les numéros de cartes associées. Les numéros de carte n'étant pas forcément connu à ce stade, c'est-à-dire lors de la définition de la clef numérique dans le module, le suivi et l'attribution des modules deviennent complexe à mettre en oeuvre.

Selon une alternative, il est possible de disposer de contacteurs externes pour la personnalisation du module de génération de codes CVV. Une fois la fabrication de la carte réalisée, la personnalisation a lieu avec un appareil externe qui permet de personnaliser une clef de chiffrement dans le module. En revanche, cette solution présente un inconvénient du point de vue de l'utilisation de la carte car les contacteurs peuvent occasionnés une gêne à l'utilisateur. Par ailleurs, visuellement, les contacteurs pénalisent le rendu esthétique de la carte.

Selon une autre alternative, le module de génération de codes CVV peut être associé à un module RF permettant d'établir une liaison avec un appareil externe qui permettrait une personnalisation après la réalisation de la carte. Cependant cette solution est couteuse et difficile à mettre en oeuvre, notamment dans le cadre d'une carte bancaire sans contact où l'un des modules créerait des interférences pour l'autre module.

Selon une autre alternative, il est possible de coupler le module de génération de codes CVV avec la puce déjà intégrée sur une carte via les contacts ISO. En revanche, cette solution est difficile du point de vue de l'intégration. En outre, elle ne permet pas de dissocier les deux composants de la carte et de les rendre indépendants. L'indépendance des deux composants contribue à sécuriser l'environnement de la carte et rend plus difficile son piratage.

Un deuxième problème est que, même avec un code CVV dynamique, il n'est pas possible de s'affranchir d'un vol des informations affichées sur la carte à puce. A titre d'exemple, lorsque la carte est visible d'un tiers, ce dernier peut recueillir les informations y compris le code CVV affiché dynamiquement et l'utiliser pendant la durée où le code est valide.

Pour cela, il est proposé dans les solutions existantes des moyens de limiter ces vols d'informations. A titre d'exemple, il est possible de disposer d'un bouton permettant de générer l'affichage du code CVV sur l'afficheur uniquement lorsque l'on en a besoin. Cette solution comporte l'inconvénient d'être difficile à intégrer sur une carte à puce et le bouton peut constituer une gêne pour un utilisateur. Par ailleurs, il peut être activé par erreur ou par la personne mal intentionnée qui se trouve temporairement en possession de la carte.

Une autre solution consiste à déclencher périodiquement l'affichage, cette solution peut être couteuse en termes de consommation d'énergie. Par ailleurs, cette solution peut présenter des désagréments lors de transactions où il est nécessaire d'attendre le moment où le code va s'afficher. S'il est nécessaire d'attendre une trop longue période pour confirmer le paiement, cette solution n'est pas viable.

### RESUME DE L'INVENTION

L'invention permet de résoudre les inconvénients précités.

Un objet de l'invention concerne un dispositif de communication comprenant :
- une mémoire permettant le stockage d'une clef numérique et un algorithme de diversification;
- un calculateur permettant de générer un code d'identification à partir d'au moins la clef numérique et de l'algorithme de diversification ;
- un afficheur permettant l'affichage d'un code d'identification généré par le calculateur.

En outre, le dispositif de communication de l'invention comprend un capteur de lumière permettant de recevoir et/ou de détecter de la lumière.

Avantageusement, le capteur de lumière est destiné à recevoir un signal lumineux, le dispositif de communication assurant une fonction d'initialisation du dispositif, la fonction d'initialisation comprenant :
- un décodage d'une séquence de données modulant un signal lumineux reçu par le capteur de lumière ;
- un stockage de la clef numérique comprise dans la séquence numérique décodée.

Un avantage est de permettre de personnaliser un dispositif tel qu'une carte à puce de manière sécurisée et simplement par un émetteur de type optique.

Un avantage est de faciliter la traçabilité d'un dispositif de communication avec une carte à puce lorsque ledit dispositif de communication est intégré dans une carte lors de sa fabrication. La clef numérique peut alors être associée à un numéro de carte après sa fabrication au moment de la personnalisation finale de la carte. Ainsi, le dispositif de communication est avantageusement un module de génération de codes d'identification, tel qu'un code de type CVV, dont la clef numérique constitue une graine d'initialisation d'algorithme de diversification.

Selon un mode de réalisation de l'invention, le calculateur permet d'assurer une fonction d'activation de l'afficheur après une acquisition d'une intensité lumineuse reçue par le capteur de lumière pendant une durée prédéfinie.

Un avantage de cette fonction est de permettre d'obtenir un retard de l'affichage du code. Ce retard d'affichage peut être entendu comme une durée minimale d'activation qui peut ainsi constituer une protection de recopie du code par un tiers.

La quantité de lumière reçue peut être une intensité lumineuse reçue. Lorsque cette intensité lumineuse est intégrée sur une échelle de temps, elle peut définir une énergie reçue.

La quantité de lumière reçue pendant une durée prédéfinie peut être mesurée selon les modes de réalisation par le capteur de lumière directement ou par le calculateur ou encore conjointement par ces deux derniers composants. A cet effet, le dispositif de communication peut comprendre une horloge, le calculateur pouvant déclencher un compteur de temps permettant d'assurer la mesure d'un flux lumineux pendant une durée donnée.

Le dispositif de communication peut comparer l'intensité lumineuse reçue à chaque instant pendant la durée de l'acquisition ou selon un autre mode le dispositif de communication peut comparer l'énergie totale reçue pendant la durée de l'acquisition à un seuil d'énergie.

Avantageusement, le dispositif de communication comprend une batterie permettant d'assurer l'alimentation de l'afficheur et du calculateur. Ceci permet de rendre le dispositif de communication autonome. Sa faible consommation permet de lui garantir une durée de vie minimale au-delà de la durée généralement attribuée à une carte à puce définissant une date d'expiration.

Avantageusement, le calculateur permet de générer le code d'identification à partir d'une donnée publique et de la clef numérique stockée dans la mémoire.

Cette génération permet d'augmenter la sécurité du code affiché et sa validité.

Avantageusement, la donnée publique est une donnée de date. Dans ce cas, le dispositif de communication comprend une horloge permettant de délivrer une date.

Selon un mode de réalisation, le dispositif de communication de l'invention comprend une horloge permettant de déterminer des intervalles de temps et dans lequel l'afficheur permet l'affichage d'un code d'identification généré par le calculateur. L'affichage d'un code d'identification est avantageusement affiché après l'écoulement d'une durée de sécurité prédéterminée après la détection de lumière.

Avantageusement, une génération d'un nouveau code d'identification est effectuée périodiquement.

Avantageusement, l'affichage d'un code d'identification est maintenu affiché pendant une durée d'affichage.

Lorsque cette solution est choisie, le serveur comprend également une horloge pour le contrôle du code d'identification, tel qu'un code CVV, et sa concordance avec la donnée correspondant à la donnée de la date qui a permis de générer le code CVV dynamique. Le serveur peut être configuré pour accepter une certaine tolérance notamment vis-à-vis de dérives d'heures de l'horloge utilisée dans le dispositif de communication.

Avantageusement, l'afficheur permet un affichage électro-phorétique. Cette solution permet de diminuer les consommations d'énergie notamment grâce à un état rémanent des données affichées.

Avantageusement, la première durée prédéterminée est comprise entre 10 min et 2 jours et que la seconde durée prédéterminée est comprise entre 1 min et 10 min.

Un autre objet de l'invention concerne une carte à puce comprenant un dispositif de communication de l'invention.

Selon un mode de réalisation de l'invention, l'afficheur du dispositif de communication est positionné du même côté de la carte que le capteur de lumière.

Un autre objet de l'invention concerne un procédé de réalisation d'une transaction à partir d'une carte à puce comprenant un dispositif comportant :
- une mémoire permettant le stockage d'une clef numérique et d'un algorithme de diversification ;
- un calculateur permettant de générer un code d'identification à partir de la clef numérique ;
- un afficheur permettant l'affichage d'un code d'identification généré par le calculateur ;
- un capteur de lumière permettant de recevoir et/ou de détecter de la lumière.

Ledit procédé comprend les étapes suivantes :
- un positionnement de la carte à puce de sorte que le capteur de lumière soit exposé à une source lumineuse pendant une durée minimale ;
- un affichage d'un code sur l'afficheur après l'exposition pendant la durée minimale.

Un avantage d'un tel procédé est de sécuriser la manoeuvre de validation du code d'identification en diminuant la durée pendant laquelle il peut être exposé à un tiers.

Un autre objet de l'invention concerne un procédé de personnalisation d'une carte à puce comprenant un numéro de carte, ledit procédé comprenant:
- une affectation d'un dispositif de communication de l'invention à un numéro de carte à puce, un identifiant dudit dispositif de communication étant stocké sur un serveur distant et étant associé audit numéro de carte ;
- un montage du dispositif de communication sur ladite carte à puce
- une affectation d'une clef numérique à un dispositif de communication associé à un numéro de carte ;
- un transfert de la clef numérique par réception sur le capteur de lumière d'un signal lumineux modulé par une séquence de données lors de la personnalisation finale de la carte à puce.

Un avantage d'un tel procédé est qu'il n'est plus nécessaire de tracer des modules de génération de code d'identification avec leur carte par une association dès leur fabrication. Il est entendu dans ce cas que le dispositif de communication de l'invention est un module de génération de codes CVV. Le module de génération de CVV étant personnalisé lors de la personnalisation finale, la graine d'initialisation est facilement appairée au numéro de compte qui est inscrit sur la carte au même moment.

Avantageusement, le transfert de la clef numérique comprend une émission d'un signal lumineux modulé par une séquence de données sur un capteur de lumière du dispositif de communication.

### BREVES DESCRIPTION DES FIGURES

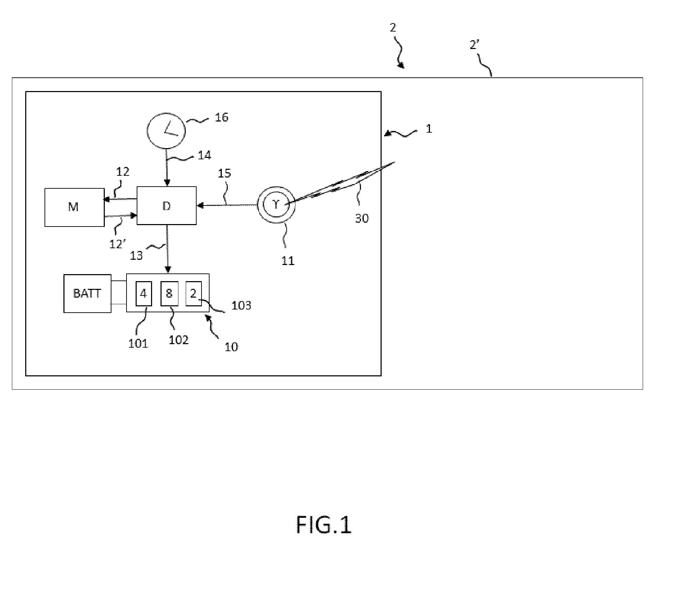

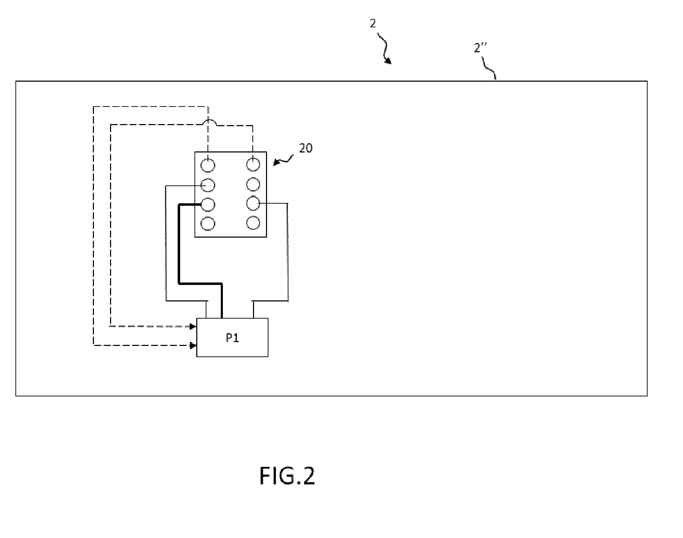

D'autres caractéristiques et avantages de l'invention ressortiront à la lecture de la description détaillée qui suit, en référence aux figures annexées, qui illustrent :
■ figure 1 : le côté verso d'une carte à puce comprenant un dispositif de communication de l'invention ;
■ figure 2 : le côté recto d'une carte à puce comprenant un dispositif de communication de l'invention.

### DESCRIPTION

Dans la suite de la description on nomme un « capteur d'activation lumineux » plus généralement un « capteur de lumière ».

On appelle indifféremment dans la présente demande une « clef de chiffrement », une « clef de chiffrement numérique » ou une « clef numérique ».

La présente description illustre un mode de réalisation dans lequel le dispositif de communication est un générateur de codes CVV dynamiques. Nous nommons plus généralement dans la présente invention un code d'identification un code généré à partir d'une clef numérique pouvant être par exemple de type CVV.

La figure 1 représente une carte à puce 2 présentée sur sa face dénommée par convention la face verso 2'. Cette face verso comprend un dispositif de communication 1 de l'invention.

Le dispositif de l'invention comprend un capteur de lumière 11 capable de recevoir un flux lumineux 30.

Le capteur de lumière peut être un élément photo sensible tel qu'une photo transistor, une photo diode ou encore une cellule photo électrique. Préférentiellement, le capteur de lumière 11 est disposé du même côté de la carte que l'afficheur 10, lorsque le dispositif de communication est intégré à une carte à puce.

Lorsque le dispositif de communication est intégré à une carte à puce, le capteur de lumière peut être disposé sous une partie translucide pour permettre une homogénéité de surface avec la surface d'une carte à puce. Selon un mode de réalisation, la partie translucide forme une partie de la surface de la carte. La partie translucide permet alors de protéger le capteur de lumière vis-à-vis d'un contact des mains ou des frottements pouvant être occasionnés lorsque la carte est mise dans une poche ou un porte-carte.

Le capteur de lumière 11 est couplé à un calculateur D. Un afficheur 10 permet d'afficher un code d'identification de type code CVV dynamique. Une mémoire M permet de stocker une clef de chiffrement numérique K ainsi qu'un algorithme de diversification. Par ailleurs, une horloge 16 permet de délivrer une donnée d'heure. Selon un mode de réalisation de l'invention, la clef numérique et la donnée d'heure permettent de générer un code d'identification au moyen du calculateur D. La génération se fait par exemple selon un algorithme de diversification connu qui associe un code d'identification unique en fonction de la date ou qui génère un nouveau code à des dates données. Ce code d'identification est valable pendant une durée prédéfinie correspondant à un intervalle de temps entre deux générations de code d'identification. L'algorithme de diversification du code d'identification à partir du secret, constitué par la clef numérique, et d'une heure est exécuté par le calculateur D. Chaque code d'identification généré est donc différent d'un précédent code grâce à la donnée d'heure.

Il existe d'autres alternatives permettant de générer un code d'identification à partir d'une clef de chiffrement et d'une donnée publique. La donnée publique est par exemple un nombre d'évènements, par exemple lorsqu'un porteur de carte incrémente par une action d'un compteur d'évènements. L'action peut être par exemple effectuée lors de chaque détection d'utilisation de la carte. Le compteur est également évalué coté serveur par exemple en dénombrant le nombre de transactions. Une tolérance doit dans ce cas être acceptée par le serveur. Le code peut donc être validé au moment de terminer la transaction.

En ce sens, le dispositif de communication de l'invention est un générateur de codes d'identification, par exemple de codes CVV dynamiques. Le capteur lumineux permet son initialisation par la définition d'une graine et son stockage dans la mémoire du générateur de codes d'identification. Cette dernière étape peut être entendue comme une étape de personnalisation de la carte à puce et n'est réalisée à priori qu'une seule fois. En outre, le capteur lumineux permet d'effectuer un test de réception d'une intensité lumineuse pendant une durée donnée afin d'activer ou pas l'affichage du code généré lors de l'utilisation de la carte.

L'afficheur ainsi que le calculateur peuvent être alimentés par une batterie BATT permettant d'afficher le code d'identification. Lorsque ce dernier code comporte 3 chiffres 101, 102, 103 tels que représentés sur la figure 1. La séquence illustrée représente le code à 3 chiffres : « 482 ».

Selon un premier mode du dispositif de communication de l'invention, une première fonction consiste à décoder une séquence lumineuse. Notons le « premier signal lumineux » le signal qui contient des données numériques qui modulent le premier signal. Cette première fonction est utilisée à l'initialisation, lors de la personnalisation de la carte, elle permet de définir, transmettre et stocker la clef de chiffrement numérique dans la mémoire M. Elle n'est à priori réalisée qu'une seule fois.

La clef de chiffrement définie une graine permettant de rendre le code d'identification variable. La graine peut éventuellement comprendre d'autres éléments d'informations si nécessaire tel qu'un identifiant. Il est possible selon une variante de réalisation d'opérer une validation de la réception de la clef de chiffrement en retour par un affichage sur l'écran ou par LED.

Selon un second mode du dispositif de communication de l'invention, une seconde fonction consiste à activer l'afficheur 10 après un temps d'exposition prédéterminé du capteur 11 à la lumière. Un avantage est de bénéficier de deux fonctions à des moments différents du cycle de vie de la carte à puce. Les deux fonctions étant supportées par un tel générateur de codes d'identification de l'invention.

En phase d'utilisation, la seconde fonction de l'élément photo sensible est de détecter que la carte est exposée à la lumière côté afficheur pendant une durée déterminée afin d'autoriser l'affichage du code d'identification.

Notons le second signal lumineux, le signal qui permet d'activer l'afficheur, c'est-à-dire que pour une intensité de lumière reçue pendant une certaine durée, le calculateur D est capable d'activer l'affichage d'un code sur un afficheur 10. Cette seconde fonction est utilisée à chaque fois que l'utilisateur a besoin d'un code d'identification. Dans ce cas, il expose la face de la carte à puce 2 comportant le capteur à la lumière11 pendant un certain temps. Dans le cas de la figure 1, la face comportant le capteur est le côté verso de la carte à puce.

Les deux modes de réalisation sont supportés par le dispositif de communication de l'invention. Ils sont activés à différents moments. En ce qui concerne la première fonction, elle est activée lors de la personnalisation de la carte donc lors de la fabrication et la configuration de la carte. En ce qui concerne la seconde fonction, elle est activée à chaque nouvelle utilisation d'un porteur de carte afin de fournir un nouveau code d'identification.

Détaillons le fonctionnement de la première fonction. Selon une première variante de réalisation, le capteur de lumière comporte un composant permettant de démoduler le signal lumineux et d'en extraire une séquence numérique. Selon une seconde variante, le calculateur comprend une interface adaptée pour recevoir un signal analogique et le convertir en signal numérique. Le dispositif de communication de l'invention comprend donc un convertisseur de signal analogique / numérique qui peut être intégré au capteur de lumière 11 ou au calculateur D. Eventuellement, le convertisseur peut être un composant à part entière situé dans la chaine de réception entre le capteur de lumière 11 et le calculateur D.

Selon des alternatives de réalisation, des composants permettant de quantifier ou de normaliser le signal reçu peuvent être utilisés dans le dispositif de communication de l'invention.

Lorsque le convertisseur est intégré au capteur 11, des données numériques sont transférées via la liaison 15 au calculateur D.

Le calculateur D permet d'extraire des informations de la séquence numérique reçue telle que la clef de chiffrement numérique. Cette dernière est alors stockée dans une mémoire M via une liaison 12. L'exemple de la figure 1 représente un mode de réalisation d'une implémentation possible.

Lors de la phase de personnalisation, un émetteur approprié permettant d'envoyer une séquence d'information modulant un signal lumineux peut être spécialement utilisé lors de cette étape. L'émetteur est positionné en regard du capteur lumineux.

Détaillons le fonctionnement de la seconde fonction.

Lorsque l'utilisateur souhaite générer un code d'identification dynamique par exemple à trois chiffres pour sécuriser une transaction, il positionne la carte à puce 2, face 2', de sorte à exposer le capteur 11 à la lumière pendant une durée donnée. Cette durée peut être de l'ordre de quelques secondes.

Le capteur de lumière acquiert un flux lumineux 30 et mesure l'intensité lumineuse reçue intégrée sur une période de temps donné. Lorsque l'intensité dépasse un seuil prédéfini pendant la durée donnée, alors un signal peut être transmis soit directement à l'afficheur 10 soit au calculateur D. Cette dernière solution correspond au mode décrit à la figure 1.

Le calculateur D active alors l'affichage d'un code d'identification. Cette activation peut être comprise comme une « autorisation d'affichage ».

Pour réaliser cette seconde fonction, contrairement à la première fonction, le signal lumineux reçu ne module pas nécessairement une séquence de données. Seule une durée ou un niveau d'énergie lumineuse est nécessaire à l'activation de l'affichage d'un code d'identification.

Selon un mode de réalisation, une horloge permet de déterminer des intervalles de temps et de générer des nouveaux codes régulièrement ou de manière pseudo aléatoire dans le temps.

Cette solution permet d'augmenter la sécurité de l'usage d'une carte à puce bancaire par exemple. Chaque code d'identification affiché est alors à usage unique.

L'affichage d'un code d'identification à usage unique est affiché après l'écoulement d'une durée de sécurité prédéterminée de sorte à ne pas exposer le code d'identification trop rapidement à un tiers.

En outre, une fois le code d'identification affiché, une fonction optionnelle peut être implémentée de sorte à maintenir l'affichage de ce code pendant une certaine durée prolongée. Cette fonction dite « de gèle » permet de geler l'affichage d'un nouveau code d'identification pendant la lecture du précédent code d'identification.

Selon un mode de réalisation, le code d'identification est généré à partir de la clef de chiffrement et d'une donnée d'heure. La clef de chiffrement est stockée dans la mémoire M, elle peut être lue par le calculateur D au moment où ce dernier est sollicité pour afficher le code d'identification. La clef et la donnée d'heure transmise via la liaison 14 peuvent être des données d'entrées d'un algorithme permettant de générer un code d'identification valide.

Dans d'autres modes de réalisation, le code d'identification comporte N digits et n'est pas limité à 3 chiffres.

La figure 2 est illustrée à titre d'information pour représenter une face verso 2" d'une carte à puce 2. La carte à puce 2 comprend une puce P1 et d'une interface 20 comprenant des contacts tel que défini dans la norme ISO7816. Certains éléments associés à la puce ne sont pas représentés comme par exemple les mémoires associées.

Une carte à puce 2 de l'invention permet donc de disposer le dispositif de communication de l'invention sur le côté verso, c'est-à-dire sur l'autre face de la carte comprenant la puce traditionnellement positionnée sur le côté recto.

L'invention permet :
- de résoudre de façon optimum du point de vue la complexité de la solution et de l'utilisation le chargement d'informations dans un module de génération de codes CVV ;
- de faciliter de fabrication d'une carte et d'en réduire le coût ;
- d'apporter une sécurité supplémentaire pour le CVV à moindre coût.

## Revendications

1. Dispositif de communication (1) comprenant :
• une mémoire (M) permettant le stockage d'une clef numérique et un algorithme de diversification ;
• un calculateur (D) permettant de générer un code d'identification à partir d'au moins la clef numérique et de l'algorithme de diversification ;
• un afficheur (10) permettant l'affichage d'un code d'identification généré (101, 102, 103) par le calculateur,
**caractérisé en ce que** le dispositif de communication comprend un capteur de lumière (11) permettant de recevoir et/ou de détecter de la lumière.

2. Dispositif de communication (1) selon la revendication 1, dans lequel le capteur de lumière (11) est destiné à recevoir un signal lumineux (30), le dispositif de communication assurant une fonction d'initialisation du dispositif, la fonction d'initialisation comprenant :
• un décodage d'une séquence de données modulant un signal lumineux reçu par le capteur de lumière ;
• un stockage de la numérique comprise dans la séquence numérique décodée.

3. Dispositif de communication (1) selon la revendication 1, dans lequel le calculateur (D) permet d'assurer :
• une fonction d'activation de l'afficheur (10) après une acquisition d'une intensité lumineuse (30) reçue par le capteur de lumière (11) pendant une durée prédéfinie.

4. Dispositif de communication (1) selon la revendication 1, dans lequel ledit dispositif comprend une batterie (BATT) permettant d'assurer l'alimentation de l'afficheur (10) et du calculateur (D).

5. Dispositif de communication selon la revendication 1, dans lequel le calculateur (D) génère le code d'identification à partir d'une donnée publique et de la clef numérique stockée dans la mémoire (M).

6. Dispositif de communication selon la revendication 5, dans lequel ledit dispositif de communication comprend une horloge (16) permettant de délivrer une date, la dite date définissant la donnée publique.

7. Dispositif de communication selon la revendication 1, lequel comprend une horloge permettant de déterminer des intervalles de temps et dans lequel l'afficheur (10) permet l'affichage du code d'identification généré (101, 102, 103) par le calculateur, ledit affichage du code d'identification étant affiché après l'écoulement d'une durée de sécurité prédéterminée après détection de lumière.

8. Dispositif de communication (1) selon la revendication 3, dans lequel une génération d'un nouveau code d'identification est effectuée périodiquement.

9. Dispositif de communication (1) selon la revendication 3, dans lequel l'affichage d'un code d'identification est maintenu affiché pendant une durée d'affichage.

10. Carte à puce (2) comprenant un dispositif de communication selon l'une quelconque des revendications 1 à 9.

11. Carte à puce (2) selon la revendication 10, dans lequel l'afficheur est positionné du même côté de la carte que le capteur de lumière.

12. Procédé de réalisation d'une transaction à partir d'une carte à puce (2) comprenant un dispositif comportant :
• une mémoire (M) permettant le stockage d'une clef numérique et un algorithme de diversification ;
• un calculateur (D) permettant de générer un code d'identification à partir d'au moins la clef numérique, la clef numérique définissant une donnée privée ;
• un afficheur (10) permettant l'affichage d'un code d'identification généré (101, 102, 103) par le calculateur ;
• un capteur de lumière (11) permettant de recevoir et/ou de détecter de la lumière,
**caractérisé en ce que** le procédé comprend :
• un positionnement de la carte à puce (2) de sorte que le capteur de lumière (11) soit exposé à une source lumineuse pendant une durée minimale ;
• un affichage d'un code d'identification sur l'afficheur (10) après l'exposition pendant la durée minimale.

13. Procédé de personnalisation d'une carte à puce (2) comprenant un numéro de carte, **caractérisé en ce que** ledit procédé comprend:
• une affectation d'un dispositif de communication selon l'une des revendications 1 à 9, à un numéro de carte à puce, un identifiant dudit dispositif de communication étant stocké sur un serveur distant et étant associé audit numéro de carte ;
• un montage du dispositif de communication sur ladite carte à puce
• une affectation d'une clef numérique à un dispositif de communication associé à un numéro de carte ;
• un transfert de la clef numérique par réception sur le capteur de lumière (11) d'un signal lumineux modulé par une séquence de données lors de la personnalisation finale de la carte à puce.
